(19) Europäisches Patentamt / European Patent Office / Office européen des brevets

(11) **EP 1 824 931 B1**

(12) **EUROPÄISCHE PATENTSCHRIFT**

(45) Veröffentlichungstag und Bekanntmachung des Hinweises auf die Patenterteilung:
**08.02.2012   Patentblatt 2012/06**

(21) Anmeldenummer: **05815942.7**

(22) Anmeldetag: **03.12.2005**

(51) Int Cl.:
**C08L 77/00** (2006.01)

(86) Internationale Anmeldenummer:
**PCT/EP2005/012981**

(87) Internationale Veröffentlichungsnummer:
**WO 2006/061158 (15.06.2006 Gazette 2006/24)**

(54) **SCHLAGZÄH-MODIFIZIERTE THERMOPLASTISCHE FORMMASSEN AUF BASIS VINYLAROMATISCHER COPOLYMERE UND POLYAMID**

IMPACT-RESISTANT MODIFIED THERMOPLASTIC MOULDING COMPOUNDS BASED ON VINYL AROMATIC COPOLYMERS AND POLYAMIDE

MATIERES MOULABLES THERMOPLASTIQUES MODIFIEES CHOC A BASE DE COPOLYMERES AROMATIQUES VINYLIQUES ET DE POLYAMIDE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **08.12.2004   DE 102004059241**

(43) Veröffentlichungstag der Anmeldung:
**29.08.2007   Patentblatt 2007/35**

(73) Patentinhaber: **Styrolution GmbH**
**67056 Ludwigshafen (DE)**

(72) Erfinder:
• **WEBER, Martin**
  **67487 Maikammer (DE)**
• **RITTIG, Frank**
  **68163 Mannheim (DE)**
• **HAENSEL, Werner**
  **67360 Lingenfeld (DE)**
• **HECKMANN, Walter**
  **69469 Weinheim (DE)**
• **HÖNL, Hans**
  **67271 Obersülzen (DE)**
• **ITTEMANN, Peter**
  **68623 Lampertheim (DE)**
• **SAMPATH, Bangaru**
  **95445 Bayreuth (DE)**

(74) Vertreter: **Jacobi, Markus Alexander**
**Isenbruck Bösl Hörschler LLP**
**Patentanwälte**
**Eastsite One**
**Seckenheimer Landstraße 4**
**68163 Mannheim (DE)**

(56) Entgegenhaltungen:
**EP-A- 0 722 986     DE-A1- 4 435 699**
**US-A- 5 288 799     US-A1- 2003 078 348**

Bemerkungen:
Die Akte enthält technische Angaben, die nach dem Eingang der Anmeldung eingereicht wurden und die nicht in dieser Patentschrift enthalten sind.

## Beschreibung

Die Erfindung betrifft thermoplastische Formmassen, enthaltend

A) 40 bis 95 Gew.-% mindestens eines Pfropfcopolymers A), das erhältlich ist durch Umsetzung von

A1) 5 bis 95 Gew.-% eines Polymers A1), ausgewählt aus Styrol-Maleinsäureanhydrid-Copolymeren, Styrol-$\alpha$-Methylstyrol-Maleinsäureanhydrid-Terpolymeren, Styrol-Acrylnitril-Maleinsäureanhydrid-Terpolymeren und Styrol-N-Phenylmaleinimid-Maleinsäureanhydrid-Terpolymeren, und

A2) 5 bis 95 Gew.-% eines aliphatischen Polyamids A2),

B) 10 bis 30 Gew.-% mindestens eines ungepfropften oder gepfropften, nichtpartikelförmigen Kautschuks ohne Kern-Schale-Struktur B), der funktionelle Gruppen aufweist, welche mit den Endgruppen der Komponente A) reagieren können,

C) 0 bis 40 Gew.-% mindestens eines teilchen- oder faserförmigen Füll- oder Verstärkungsstoffs C),

D) 0 bis 50 Gew.-% mindestens eines Copolymers D) aus vinylaromatischen Monomeren d1) und Comonomeren d2) und

E) 0 bis 30 Gew.-% mindestens eines weiteren Zusatzstoffes E),

wobei die Summe der Komponenten A) bis E) 100 Gew.-% ergibt.

Weiterhin betrifft die Erfindung ein Verfahren zur Herstellung der thermoplastischen Formmassen, die Verwendung der thermoplastischen Formmassen zur Herstellung von Formkörpern, Folien, Fasern und Schäumen, und schließlich die Formkörper, Folien, Fasern und Schäume erhältlich aus den thermoplastischen Formmassen.

Blends auf Basis vinylaromatischer Copolymere und Polyamid sind bekannt. Solche Blends weisen aufgrund der Unverträglichkeit zwischen den vinylaromatischen Copolymeren und Polyamid im allgemeinen sehr schlechte Zähigkeiten auf. Beispielsweise finden binäre Mischungen aus Styrol-Acrylnitril-Copolymeren ("SAN") und Polyamid aufgrund ihrer schlechten mechanischen Eigenschaften kaum technische Verwendungen.

Bekannt ist ferner, dass die mechanischen Eigenschaften, insbesondere die Schlagzähigkeiten, von Blends auf Basis vinylaromatischer Copolymere und Polyamid verbessert werden können, indem Polymere, die funktionelle Gruppen aufweisen, welche mit den Endgruppen des Polyamides reagieren können, zugemischt werden. Diese Polymeren wirken verträglichkeitsvermittelnd zwischen der Polyamidphase und der Phase, die die vinylaromatischen Copolymere bilden.

Blends der letztgenannten Art aus Acrylnitril-Butadien-Styrol-Copolymeren ("ABS") und Polyamid, in denen beispielsweise Copolymere aus Styrol, Acrylnitril und Maleinsäureanhydrid oder Styrol, Methylmethacrylat und Maleinsäureanhydrid als Verträglichkeitsvermittler eingesetzt werden, sind unter anderem aus EP-A 202 214 und WO 98/27157 bekannt.

US-A-5,288,799 beschreibt thermoplastische Formmassen enthaltend ein semikristallines Polyamid sowie ein amorphes Copolyamid. Das amorphe Copolyamid ist ein teilaromatisches Copolymerisat, welches auf aromatischen Säuren und dimerisierten Fettsäuren basiert. Als Kompatibilitätsvermittler wird ein funktionalisiertes Oligomer oder Polymer, z.B. ein Styrol-MSA-Oligomer, vorgeschlagen. Als Zähigkeitsvermittler kommen z.B. Styrol-Blockcopolymere in Betracht.

EP-A-722 986 offenbart thermoplastische Formmassen, enthaltend ein teilaromatisches Co-Polyamid, ein Polymer aus der Gruppe ASA, ABS, SAN und $C_1$-$C_{18}$-Alkylester der (Meth)acrylsäure, ein Haftvermittler mit funktionellen Monomeren sowie optional ein kautschukelastisches Polymerisat und Füllstoffe.

WO 04/83303 offenbart Formmassen aus bestimmten vinylaromatischen Copolymeren, Polyamid und einem Pfropfcopolymer, wobei das Pfropfcopolymer in einem separaten Herstellschritt durch Umsetzung beispielsweise eines Styrol-Acrylnitril-Maleinsäureanhydrid-Copolymeren mit einer Teilmenge des Polyamids erhältlich ist. Als vinylaromatische Copolymere werden in diesen Formmassen mit partikelförmigen Kautschuken schlagzäh modifizierte Matrixpolymere, insbesondere ABS, offenbart.

Obwohl insbesondere die letztgenannten bekannten Formmassen im allgemeinen ein gutes Eigenschaftsprofil aufweisen, ist eine weitere Verbesserung bestimmter mechanischer Eigenschaften wünschenswert.

Es bestand daher die Aufgabe, schlagzäh modifizierte thermoplastische Formmassen auf Basis vinylaromatischer Copolymere und Polyamid mit verbesserten mechanischen Eigenschaften, insbesondere verbesserter Kerbschlagzähigkeit, Schädigungsarbeit beziehungsweise Steifigkeit, bereitzustellen.

Demgemäß wurden die eingangs definierten thermoplastischen Formmassen, deren Herstellung, und die Formkörper, Folien, Fasern und Schäume aus den Formmassen gefunden.

Bevorzugte Ausführungsformen der Erfindung werden im folgenden beschrieben.

Die Formmassen enthalten

A) 40 bis 90 und bevorzugt 45 bis 85 Gew.-% der Komponente A),

B) 10 bis 30 und bevorzugt 15 bis 25 Gew.-% der Komponente B),

C) 0 bis 40 und bevorzugt 0 bis 30 Gew.% der Komponente C),

D) 0 bis 50 und bevorzugt 0 bis 40 Gew.-% der Komponente D), und

E) 0 bis 30 und bevorzugt 0 bis 20 Gew.-% der Komponente E),

wobei die Mengen innerhalb der vorstehenden Bereiche derart gewählt sind, dass sich die Summe der Komponenten A) bis E) zu 100 Gew.-% ergänzt. Die Komponenten C), D) und E) sind optional.

Komponente A): Pfropfcopolymer

Komponente A) ist ein Pfropfcopolymer, erhältlich durch Umsetzung von einem Polymer A1), das aus einem Dicarbonsäureanhydrid a11) und vinylaromatischen Comonomeren a12) erhältlich ist, und einem Polyamid A2).

Vermutlich enthält das Pfropfcopolymer A) aus dem Polymer A1) stammende Wiederholeinheiten und aus den Polyamiden A2) stammende Wiederholeinheiten. Es besteht die Vorstellung, dass ein Rückrat (backbone) aus Polymer A1) vorliegt, an das Polyamid-Seitenketten gebunden sind. Nachfolgend werden zunächst die Komponenten A1) und A2), und danach Einzelheiten ihrer Umsetzung zu A) beschrieben.

Komponente A1): Polymer aus Dicarbonsäureanhydrid und Comonomer

Das Polymer A1) wird durch Umsetzung eines Dicarbonsäureanhydrids a11) mit vinylaromatischen Comonomeren a12) erhalten. Dabei ist die Bezeichnung Comonomere nicht derart zu verstehen, dass diese Monomere mengenmäßig untergeordnet sind. Tatsächlich stellen die vinylaromatischen Comonomere a12) in vielen Fällen die Hauptkomponente(n) dar, bezogen auf das Polymer A1), d.h. in vielen Fällen enthält das Polymer A1) mehr vinylaromatischen Comonomere a12) als Dicarbonsäureanhydrid a11).

Bevorzugt enthält das Polymer A1)

a11) 0,01 bis 30, bevorzugt 0,1 bis 20 und insbesondere 0,5 bis 10 Gew.-% des Dicarbonsäureanhydrids a11), und
a12) 70 bis 99,99, bevorzugt 80 bis 99,9 und insbesondere 90 bis 99,5 Gew.-% der vinylaromatischen Comonomeren a12).

Als Dicarbonsäureanhydrid a11) eignen sich insbesondere $\alpha,\beta$-ungesättigte Dicarbonsäureanhydride. Bevorzugt sind Maleinsäureanhydrid ("MSA"), Methylmaleinsäureanhydrid und Itaconsäureanhydrid. MSA ist besonders bevorzugt. Man kann auch Mischungen verschiedener Dicarbonsäureanhydride verwenden.

Als vinylaromatische Comonomere a12) geeignet sind Styrol, mit $C_{1-10}$-Alkylresten ringsubstituierte Styrole wie $\alpha$-Methylstyrol, p-Methylstyrol, Ethylstyrol, tert.-Butylstyrol, außerdem 1,2-Diphenylethylen, 1,1-Diphenylethylen, die Vinylnaphthaline oder deren Mischungen. Styrol, $\alpha$-Methylstyrol, p-Methylstyrol und Vinylnaphthalin sind bevorzugt, Styrol und $\alpha$-Methylstyrol besonders bevorzugt.

In einer weiteren Ausführungsform der Erfindung umfaßt das Polymer A1) neben dem Dicarbonsäureanhydrid a11) und den vinylaromatischen Comonomeren a12) weitere Comonomere a 13).

Besonders bevorzugt enthalten solche Polymere A1), die weitere Comonomere a13) umfassen,

a11) 0,01 bis 30, bevorzugt 0,1 bis 20 und insbesondere 0,5 bis 10 Gew.-% der Dicarbonsäureanhydride a11),

a12) 10 bis 92,99, bevorzugt 40 bis 89,9 und insbesondere 42 bis 85,5 Gew.-% der vinylaromatischen Comonomere a12), und

a13) 7 bis 50, bevorzugt 10 bis 40 und insbesondere 14 bis 38 Gew.-% der weiteren Comonomere a13),

wobei die Mengen innerhalb der vorstehenden Bereiche derart gewählt werden, dass sich die Summe der Komponenten a11), a12) und a13) zu 100 Gew.-% ergänzt.

Beispielsweise sind als weitere Comonomere a13) geeignet:

Nitrile wie Acrylnitril oder Methacrylnitril,

$C_1$- bis $C_{12}$-Alkylester der Acrylsäure bzw. der Methacrylsäure. Bevorzugte Acrylsäurealkylester sind Ethylacrylat und die Methacrylate. Es können auch Mischungen verschiedener Acrylsäurealkylester verwendet werden, die sich in ihrem Alkylrest unterscheiden. Als Methacrylsäurealkylester ist insbesondere Methylmethacrylat geeignet.

konjugierte Diene wie Butadien, Isopren und Chloropren, weiterhin auch Norbornen und Dicyclopentadien,

Glycidylester, z.B. Glycidylacrylat und -methacrylat,

N-substituierte Maleinimide wie N-Methyl-, N-Butyl-, N-Phenyl- und N-Cyclohexylmaleinimid,

Acrylsäure, Methacrylsäure, weiterhin Dicarbonsäuren wie Maleinsäure, Fumarsäure und Itaconsäure,

Stickstoff-funktionelle Monomere wie Dimethylaminoethylacrylat, Diethylaminoethylacrylat, Vinylimidazol, Vinylpyrrolidon, Vinylcaprolactam, Vinylcarbazol, Vinylanilin, Acrylamid und Methacrylamid,

aromatische und araliphatische Ester der Acrylsäure und Methacrylsäure wie Phenylacrylat, Phenylmethacrylat, Benzylacrylat, Benzylmethacrylat, 2-Phenylethylacrylat, 2-Phenylethylmethacrylat, 2-Phenoxyethylacrylat und 2-Phenoxyethylmethacrylat.

ungesättigte Ether wie Vinylmethylether, sowie Mischungen der vorgenannten Monomere.

Davon sind als weitere Comonomere a13) bevorzugt: Acrylnitril, Methacrylnitril, Acrylamid und Methacrylamid, Acrylsäure- und Methacrylsäureverbindungen wie Methylmethacrylat, N-Phenylmaleinimid und N-Alkylmaleinimide wie N-Methylmaleinimid, N-Butylmaleinimid, N-Isopropylmaleinimid und N-Cyclohexylmaleinimid, oder deren Mischungen.

Besonders bevorzugt sind als weitere Comonomere a13): Acrylnitril, Methacrylnitril, Methylmethacrylat, N-Phenylmaleinimid und den N-Alkylmaleinimide. Ganz besonders bevorzugt ist Acrylnitril.

Die Polymere A1) sind:

- Styrol-MSA-Copolymere,
- Styrol-$\alpha$-Methylstyrol-MSA-Terpolymere,
- Styrol-Acrylnitril-MSA-Terpolymere und
- Styrol-N-Phenylmaleinimid-MSA-Terpolymere.

Die Polymere A1) werden in an sich bekannter Weise hergestellt, beispielsweise durch Substanz-, Lösungs-, Emulsions-, Suspensions- oder Fällungspolymerisation, wozu übliche Polymerisationshilfsstoffe (z.B. Initiatoren, Emulgatoren, Suspendierhilfsmittel, Molekulargewichtsregler, etc.) mitverwendet werden können.

Besonders bevorzugt ist die Herstellung durch Substanz- oder Lösungspolymerisation. Beispielsweise kann man die Monomeren, etwa Styrol, Acrylnitril und MSA, in einem geeigneten Lösungsmittel wie Methylethylketon lösen, ggf. Polymerisationsinitiator (siehe nächster Absatz) zufügen und bei erhöhter Temperatur polymerisieren. Anschließend entfernt man das Lösungsmittel und die nicht umgesetzten Monomere in üblicher Weise.

Die Initiierung der Polymerisation kann thermisch oder durch radikalische Polymerisationsinitiatoren erfolgen, beispielsweise Azoverbindungen wie 2,2'-Azobis(isobutyro-nitril), Redoxsysteme auf Basis von tertiären Aminen und Peroxiden, oder bevorzugt Peroxiden wie Dilauroylperoxid, Dibenzoylperoxid oder 2,2-Bis(tert.-butylperoxy)butan. Auch Peroxidmischungen, z.B. aus Dilauroylperoxid und 2,2-Bis(tert.-butylperoxy)-butan, sind gut geeignet.

Zur Einstellung des Molekulargewichts kann man übliche Molekulargewichtsregler wie n-Dodecylmercaptan oder 2-Ethylhexylthioglycolat verwenden.

Das gewichtsmittlere Molekulargewicht $M_w$ der Polymere beträgt in der Regel 10.000 bis 1.000.000, bevorzugt 50.000 bis 500.000 und insbesondere 70.000 bis 200.000 g/mol.

Komponente A2): Polyamid

Das Polyamid A2) ist ein Polyamid mit aliphatischem Aufbau.

Halbkristalline oder amorphe Harze mit einem Molekulargewicht (Gewichtsmittelwert) von mindestens 5.000, wie sie z.B. in den US-PS 2 071 250, 2 071 251, 2 130 523, 2 130 948, 2 241 322, 2 312 966, 2 512 606 und 3 393 210 beschrieben werden, sind bevorzugt. Beispiele hierfür sind Polyamide, die sich von Lactamen mit 7 bis 13 Ringgliedern ableiten, wie Polycaprolactam, Polycapryllactam und Polylaurinlactam, sowie Polyamide, die durch Umsetzung von Dicarbonsäuren mit Diaminen erhalten werden.

Als Dicarbonsäuren sind Alkandicarbonsäuren mit 6 bis 12, insbesondere 6 bis 10 Kohlenstoffatomen einsetzbar. Hier seien Adipinsäure, Azelainsäure, Sebacinsäure und Dodecandisäure (= Decandicarbonsäure) als Säuren genannt.

Als Diamine eignen sich besonders Alkandiamine mit 6 bis 12, insbesondere 6 bis 8 Kohlenstoffatomen.

Bevorzugte Polyamide sind Polyhexamethylenadipinsäureamid (PA 66) und Polyhexamethylensebacinsäureamid (PA 610), Polycaprolactam (PA 6) sowie Copolyamide 6/66, insbesondere mit einem Anteil von 5 bis 95 Gew.% an Caprolactam-Einheiten. Bevorzugt ist das Polyamid C2) ausgewählt aus PA 6, PA 66 und Copolyamid 6/66; PA 6 ist ganz besonders bevorzugt.

Weitere geeignete Polyamide sind erhältlich aus ω-Aminoalkylnitrilen wie z.B. Aminocapronitril (PA 6) und Adipodinitril mit Hexamethylendiamin (PA 66) durch sog. Direktpolymerisation in Anwesenheit von Wasser, wie beispielsweise in der DE-A 10313681, EP-A 1198491 und EP-A 922065 beschrieben.

Außerdem seien auch noch Polyamide erwähnt, die z.B. durch Kondensation von 1,4-Diaminobutan mit Adipinsäure unter erhöhter Temperatur erhältlich sind (Polyamid 46). Herstellungsverfahren für Polyamide dieser Struktur sind z.B. in den EP-A 38 094, EP-A 38 582 und EP-A 39 524 beschrieben.

Weitere Beispiele sind Polyamide, die durch Copolymerisation zweier oder mehrerer der vorgenannten Monomeren erhältlich sind, oder Mischungen mehrerer Polyamide geeignet, wobei das Mischungsverhältnis beliebig ist.

Die nachfolgende, nicht abschließende Aufstellung enthält die genannten, sowie weitere Polyamide A2) im Sinne der Erfindung und die enthaltenen Monomeren:

AB-Polymere:

| | |
|---|---|
| PA 6 | ε-Caprolactam |
| PA 7 | Ethanolactam |
| PA 8 | Capryllactam |
| PA 9 9- | Aminopelargonsäure |
| PA 11 | 11-Aminoundecansäure |
| PA 12 | Laurinlactam |

AA/BB-Polymere:

| | |
|---|---|
| PA 46 | Tetramethylendiamin, Adipinsäure |
| PA 66 | Hexamethylendiamin, Adipinsäure |
| PA 69 | Hexamethylendiamin, Azelainsäure |
| PA 610 | Hexamethylendiamin, Sebacinsäure |
| PA 612 | Hexamethylendiamin, Decandicarbonsäure |
| PA 613 | Hexamethylendiamin, Undecandicarbonsäure |
| PA 1212 | 1,12-Dodecandiamin, Decandicarbonsäure |
| PA 1313 | 1,13-Diaminotridecan, Undecandicarbonsäure |

| | |
|---|---|
| PA 6/66 | (siehe PA 6 und PA 66) |
| PA 6/12 | (siehe PA 6 und PA 12) |
| PA 66/6/610 | (siehe PA 66, PA 6 und PA 610) |

Die Polyamide A2) und ihre Herstellung sind bekannt, beispielsweise aus Ullmanns Encyklopädie der Technischen Chemie, 4. Auflage, Bd. 19, S. 39-54, Verlag Chemie, Weinheim 1980; Ullmanns Encyclopedia of Industrial Chemistry, Vol. A21, S. 179-206, VCH Verlag, Weinheim 1992; Stoeckhert, Kunststofflexikon, 8. Auflage, S. 425-428, Carl Hanser Verlag München 1992 (Stichwort "Polyamide" und folgende), sowie Saechtling, Kunststoff-Taschenbuch, 27. Ausgabe, Carl Hanser-Verlag München1998, Seiten 465-478.

Auf die Herstellung der bevorzugten Polyamide PA6, PA 66 und Copolyamid 6/66 wird nachfolgend kurz eingegangen. Die Polymerisation bzw. Polykondensation der Ausgangsmonomere zum Polyamid wird vorzugsweise nach den üblichen Verfahren durchgeführt. So kann die Polymerisation des Caprolactams beispielsweise nach den in der DE-A 14 95 198 und DE-A 25 58 480 beschriebenen kontinuierlichen Verfahren erfolgen. Die Polymerisation von AH-Salz zur Herstellung von PA 66 kann nach dem üblichen diskontinuierlichen Verfahren (siehe: Polymerization Processes S. 424-467, insbesondere S. 444-446, Interscience, New York,1977) oder nach einem kontinuierlichen Verfahren, z.B. gemäß EP-A 129 196, erfolgen.

Bei der Polymerisation können übliche Kettenregler mitverwendet werden. Geeignete Kettenregler sind z.B.

Triacetondiaminverbindungen (siehe WO-A 95/28443), Monocarbonsäuren wie Essigsäure, Propionsäure und Benzoesäure, Dicarbonsäuren wie Adipinsäure, Sebacinsäure, Cyclohexan-1,4-Dicarbonsäure, Isophthalsäure und Terephthalsäure sowie Basen wie Hexamehtylendiamin, Benzylamin und 1,4-Cyclohexyldiamin geeignet.

Die erhaltene Polymerschmelze wird aus dem Reaktor ausgetragen, gekühlt und granuliert. Das erhaltene Granulat kann einer Nachpolymerisation unterworfen werden, die in der Regel 2 bis 24 Stunden dauert. Dies geschieht in an sich bekannter Weise durch Erwärmen des Granulats auf eine Temperatur T unterhalb der Schmelztemperatur $T_s$ bzw. Kristallitschmelztemperatur $T_k$ des Polyamids. Durch die Nachpolymerisation stellt sich das endgültige Molekulargewicht des Polyamids (messbar als Viskositätszahl VZ, siehe Angaben zur VZ weiter unten) ein.

Geeignete Polyamide A2) weisen im allgemeinen eine Viskositätszahl VZ von 50 bis 250, vorzugsweise 70 bis 200 und besonders bevorzugt 90 bis 170 ml/g auf, bestimmt gemäß ISO 307 EN an einer 0,5 gew.-%igen Lösung des Polyamids in 96 gew.-%iger Schwefelsäure bei 25°C. Diesen Viskositätszahlen entsprechen übliche und hohe Molekulargewichte.

Umsetzung der Komponenten A1) und A2) zum Pfropfcopolymer A)

Das Pfropfcopolymer A) ist erhältlich durch Umsetzung von

A1) 5 bis 95, bevorzugt 10 bis 90 und insbesondere 15 bis 85 Gew.% des Polymers A1), das aus einem Dicarbonsäureanhydrid a11) und vinylaromatischen Comonomeren a12) und ggf. weiteren Comonomeren a13) erhalten wird, und

A2) 5 bis 95, bevorzugt 10 bis 90 und insbesondere 15 bis 85 Gew.-% des Polyamids A2).

In einer bevorzugten Ausführungsform setzt man solche Mengen an A1) und A2) ein, dass das molare Verhältnis M

$$M = \frac{\text{Anhydridgruppen }-(CO)-O-(CO)- \text{ im Polymer A1)}}{\text{Aminoendgruppen }-NH_2 \text{ im Polymer A2)}}$$

von 3: 1 bis 0,7 : 1, bevorzugt 2: 1 bis 0,85 : 1, beträgt.

Die Umsetzung von A1) mit A2) kann vorab in einem ersten Reaktionsschritt erfolgen, indem man A1) und A2) separat miteinander umsetzt. Das erhaltene Pfropfcopolymer A) wird danach in einem zweiten Reaktionsschritt mit den anderen Komponenten B) und ggf. C), D) und E) zur erfindungsgemäßen thermoplastischen Formmasse abgemischt.

Die Vorab-Umsetzung erfolgt bevorzugt in der Schmelze. Dazu werden die Ausgangsstoffe A1) und A2) unter Aufschmelzen vermischt und die Mischung für eine gewisse Zeit, die ausreichend ist zum Ablauf der chemischen Reaktion zwischen A1) und A2), schmelzflüssig gehalten und erforderlichenfalls durchmischt.

Vorzugsweise verwendet man dazu Schneckenkneter oder andere Schmelzemischvorrichtungen. Geeignet sind z.B. einwellige Kneter, beispielsweise Ko-Kneter, Einschneckenextruder, auch solche mit Misch- oder Scherteilen, und zweiwellige Kneter, beispielsweise Zweischneckenextruder Typ ZSK oder ZE, Kombiplast-Extruder, Doppelschnecken-Knetmischer MPC, zweistufige Mischer FCM, Knetschneckenextruder KEX, Scherwalzenextruder. Auch Kneter mit oder ohne Stempel, Trogkneter oder Banburry-Mischer sind zweckentsprechend. Einzelheiten sind z.B. Saechtling, Kunststoff-Taschenbuch, 27. Ausgabe, Hanser Verlag München 1998, Seite 202-211 zu entnehmen.

Bevorzugt erhält man das Pfropfcopolymer A) durch Schmelzecompoundierung des Polymers A1) und des Polyamids A2).

Bei der Umsetzung in der Schmelze beträgt die Temperatur von 200 bis 350, bevorzugt 220 bis 340 und insbesondere 230 bis 335°C. Ganz besonders bevorzugt liegt die Temperatur 10 bis 50°C oberhalb der Schmelztemperatur des eingesetzten Polyamids A2). Verwendet man amorphe Polyamide A2), so liegt die Temperatur bevorzugt 30 bis 150°C oberhalb der Glasübergangstemperatur des amorphen Polyamids A2), bestimmt mittels Differential Scanning Calorimetry (DSC).

Der Druck ist üblicherweise nicht kritisch und beträgt z.B. 2 bis 100 bar absolut.

Die Dauer der Umsetzung bzw. die Verweilzeiten betragen üblicherweise 0,1 bis 20, bevorzugt 0,2 bis 15 und insbesondere 0,3 bis 10 min. Nach erfolgter Umsetzung wird die Schmelze in üblicher Weise ausgetragen, abgekühlt und granuliert.

Alternativ zur Vorab-Umsetzung in der Schmelze kann man A1) und A2) auch vorab in Lösung umsetzen. Dazu werden A1) und A2) getrennt voneinander in geeigneten Lösungs- oder Quellmitteln gelöst bzw. gequollen, und die erhalten Lösungen bzw. gequollenen Substanzen miteinander umgesetzt. Falls für A1) und A2) ein gemeinsames Lösungsmittel existiert, kann man auch A1) und A2) gemeinsam lösen bzw. quellen. Geeignete Lösungsmittel sind beispielsweise halogenierte Alkohole wie Hexafluoroisopropanol (HFIP). Nach erfolgter Umsetzung entfernt man die Lösungsmittel auf übliche Weise, z.B. mit einem Eindampfextruder.

Bei dieser Umsetzung in Lösung beträgt die Temperatur in der Regel 0 bis 100, bevorzugt 5 bis 90 und insbesondere 10 bis 80°C. Der Druck ist üblicherweise nicht kritisch.

Bevorzugt werden die Reaktionsbedingungen der Umsetzung in Lösung derart gewählt, dass das entstehende Reaktionswasser entweder durch chemische Reaktion, oder physikalisch durch geeignete Schleppmittel, aus der Reaktionsmischung entfernt wird. Zur chemischen Entfernung kann man beispielsweise Acetanhydrid mitverwenden.

Die Bildung des Pfropfcopolymers A) kann aber auch in situ bei der Herstellung der erfindungsgemäßen Formmassen erfolgen, indem in einem einzigen Reaktionsschritt A1) und A2) und die anderen Formmassen-Komponenten B) und ggf. C), D) und E) durch Schmelzevermischung in einer Mischvorrichtung miteinander umgesetzt werden. Geeignete Verfahrensparameter und Vorrichtungen werden im folgenden näher beschrieben (s. "Herstellung der erfindungsgemäßen Formmassen", wobei anstelle der Komponente A) die Komponenten A1) und A2) einzusetzen sind).

In einer besonders bevorzugten Ausführungsform wird die Umsetzung von A1) und A2) derart ausgestaltet, dass mindestens 35 mol%, bevorzugt mindestens 45 mol-% des eingesetzten Polyamids A2) mit dem Polymer A1) zum Pfropfcopolymer A) reagieren. Die dazu erforderlichen Mengenverhältnisse, Temperaturen, Reaktionsdauern und sonstigen Reaktionsbedingungen lassen sich durch einfache Vorversuche feststellen. Das Ausmaß der Umsetzung kann man ermitteln, indem man am Reaktionsprodukt der Umsetzung von A1) und A2) die Anzahl der Amino-Endgruppen durch potentiometrische Titration oder andere geeignete Methoden bestimmt, oder indem man die Reaktionsmischung durch Gelpermeationschromatographie oder andere chromatographische Methoden untersucht.

Komponente B): Kautschuk

Für die erfindungsgemäßen Formmassen sind als Komponente B) ungepfropfte oder gepfropfte, nicht-partikelförmige Kautschuke ohne Kern-Schale-Struktur geeignet, die funktionelle Gruppen aufweisen, welche mit den Endgruppen der Komponente A) reagieren können.

Geeignete funktionelle Gruppen sind z.B. Carbonsäure-, Carbonsäureanhydrid-, Carbonsäureester-, Carbonsäureamid-, Carbonsäureimid-, Amino-, Hydroxyl-, Epoxid-, Urethan- und Oxazolingruppen. Geeignete Monomere zur Einführung der funktionellen Gruppen sind beispielsweise Maleinsäureanhydrid, Itaconsäure, Acrylsäure, Glycidylacrylat und Glycidylmethacrylat. Diese Monomere können nach dem Fachmann bekannten Methoden beispielsweise in der Schmelze oder in Lösung, gegebenenfalls, in Gegenwart eines Radikalstarters wie Cumolhydroperoxid, mit dem Ausgangs-Kautschuk umgesetzt, beispielsweise aufgepfropft, werden.

Als Kautschuke B) sind beispielsweise Copolymere von $\alpha$-Olefinen geeignet, die funktionelle Gruppen aufweisen, welche mit den Endgruppen der Komponente A) reagieren können. Bei den $\alpha$-Olefinen handelt es sich üblicherweise um Monomere mit 2 bis 8 C-Atomen, vorzugsweise Ethylen und Propylen, insbesondere Ethylen. Als Comonomere kommen insbesondere Alkylacrylate oder Alkylmethacrylate, die sich von Alkoholen mit 1 bis 8 C-Atomen, vorzugsweise von Ethanol, Butanol oder Ethylhexanol, ableiten sowie reaktive Comonomere wie Acrylsäure, Methacrylsäure, Maleinsäure, Maleinsäureanhydrid oder Glycidyl(meth)acrylat und weiterhin Vinylester, insbesondere Vinylacetat, in Betracht. Mischungen verschiedener Comonomere können ebenfalls eingesetzt werden. Besonders geeignet sind Copolymere des Ethylens mit Ethyl- oder Butylacrylat und Acrylsäure und/oder Maleinsäureanhydrid. Derartige $\alpha$-Olefin-Copolymere sind handelsüblich, z.B. als Lupolen® KR 1270 von BASF Aktiengesellschaft.

Eine weitere bevorzugte Ausführungsform dieser Kautschuke B) sind Ethylen-Propylen-Copolymere ("EP-Kautschuke"), die funktionelle Gruppen aufweisen, welche mit den Endgruppen der Komponente A) reagieren können.

Als besonders bevorzugte Kautschuke B) geeignet sind solche auf Basis von Ethylen und Octen, die funktionelle Gruppen aufweisen, welche mit den Endgruppen der Komponente A) reagieren können. In Betracht kommen insbesondere mit Maleinsäureanhydrid gepfropfte Ethylen-Octen-Copolymere, z.B. das Handelsprodukt Fusabond® N NM493D von Fa. DuPont.

Diese Copolymere können in einem Hochdruckprozess bei einem Druck von 400 bis 4500 bar oder durch Pfropfen der Comonomeren auf ein Poly-$\alpha$-olefin hergestellt werden. Der Anteil des $\alpha$-Olefins an dem Copolymeren liegt üblicherweise im Bereich von 99,95 bis 55 Gew.-%.

Geeignete Kautschuke B) sind auch aus Ethylen, Propylen und einem Dien aufgebaute ("EPDM-Kautschuk"), siehe auch EP-A 163 411, EP-A 244 857, die funktionelle Gruppen aufweisen, welche mit den Endgruppen der Komponente A) reagieren können. Als EPDM-Kautschuk werden bevorzugt solche verwendet, die eine Glastemperatur im Bereich von -60 bis -40°C aufweisen. Die EPDM-Kautschuke haben nur eine geringe Anzahl von Doppelbindungen, d. h. weniger als 20 Doppelbindungen pro 1000 C-Atome, insbesondere 3 bis 10 Doppelbindungen pro 1000 C-Atome. Beispiele für solche EPDM-Kautschuke sind Terpolymerisate von mindestens 30 Gew.% Ethylen, mindestens 30 Gew.-% Propylen und 0,5 bis 15 Gew.-% einer nichtkonjugierten diolefinischen Komponente. Als funktionalisierter EPDM-Kautschuk kommt zum Beispiel das Royaltuf® 485 der Fa. Crompton in Frage.

Als Dienkomponente für EPDM-Kautschuke werden in der Regel Diolefine mit mindestens 5 Kohlenstoffatomen, wie 5-Ethylidennorbornen, Dicyclopentadien, 2,2,1-Dicyclopentadien und 1,4-Hexadien angewendet. Ferner sind geeignet Polyalkylenamere wie Polypentenamer, Polyoctenamer, Polydodecanamer oder Gemische dieser Stoffe. Ferner kommen auch teilhydrierte Polybutadienkautschuke in Betracht, bei denen mindestens 70 % Restdoppelbindungen hydriert sind.

In der Regel haben EPDM-Kautschuke eine Mooney-Vikosität $ML_{1-4}$(100°C) von 25 bis 120. Sie sind im Handel erhältlich.

Geeignete Kautschuke B) sind weiterhin solche aus vinylaromatischen Monomeren und Dienen, beispielsweise Styrol und Butadien oder Isopren, wobei die Diene ganz oder teilweise hydriert sein können, die funktionelle Gruppen aufweisen, welche mit den Endgruppen der Komponente A) reagieren können. Solche Copolymere können z.B. statistisch aufgebaut sein, oder eine Blockstruktur aus Vinylaromatblöcken und Dienblöcken aufweisen, oder eine tapered-Struktur (Gradient entlang der Polymerkette von dienarm nach dienreich) aufweisen. Die Copolymere können linear, verzweigt oder sternförmig aufgebaut sein. Die Blockcopolymere können zwei oder mehr Blöcke aufweisen, und die Blöcke können auch statistisch oder tapered sein.

Geeignete Styrol-Butadien-Copolymere sind beispielsweise Zweiblockcopolymere Styrol-Butadien ("SB"), Dreiblockcopolymere Styrol-Butadien-Styrol ("SBS") und insbesondere hydrierte Dreiblockcopolymere Styrol-Ethenbuten-Styrol ("SEBS"). Derartige Copolymere aus Styrol und Dienen sind z.B. als Styrolux® oder Styroflex® von BASF Aktiengesellschaft erhältlich. Mit Anhydridgruppen funktionalisierte Styrol-Ethenbuten-Blockcopolymere sind beispielsweise als Kraton® G 1901 FX kommerziell erhältlich.

Die genannten Blockcopolymere werden üblicherweise durch sequentielle anionische Polymerisation hergestellt. Dabei wird beispielsweise zunächst Styrol mit einer Organolithiumverbindung als Initiator zu einem Styrolblock polymerisiert, anschließend Butadien zugefügt und an den Styrolblock ein Butadienblock anpolymerisiert, ggf. anschließend erneut Styrol zugefügt und ein Styrolblock anpolymerisiert. Eine eventuelle Hydrierung der Dienblöcke erfolgt in der Regel in der Regel katalytisch unter Wasserstoff-überdruck.

Selbstverständlich können auch Mischungen verschiedener Kautschuke B) eingesetzt werden.


Komponente C): Füll- oder Verstärkungsstoff


Als Komponente C) sind alle in der Kunststoffherstellung und -verarbeitung üblichen, dem Fachmann bekannten und in der Literatur beschriebenen teilchenförmigen oder faserförmigen Füllstoffe oder Verstärkungsstoffe geeignet. Bevorzugte Komponente C) sind Glasfasern und/oder Talkum.


Komponente D): Copolymer aus vinylaromatischen Monomeren und Comonomeren


Komponente D) ist ein Copolymer aus vinylaromatischen Monomeren d1) und Comonomeren d2). Solche Copolymere sind dem Fachmann bekannt und in der Literatur beschrieben.

Als vinylaromatische Monomere d1) kommen beispielsweise in Betracht: Styrol, α-Methylstyrol, und mit $C_{1-10}$-Alkylresten ringsubstituierte Styrole wie p-Methylstyrol, Ethylstyrol, tert.-Butylstyrol, Vinylstyrol, Vinyltoluol, außerdem 1,2-Diphenylethylen, 1,1-Diphenylethylen, die Vinylnaphthaline oder deren Mischungen. Styrol, α-Methylstyrol, p-Methylstyrol und Vinylnaphthalin sind bevorzugt, Styrol und α-Methylstyrol besonders bevorzugt.

Als Comonomere d2) sind z.B. die bereits als Komponente a13) beschriebenen Monomere geeignet.

Bevorzugt ist das Comonomer d2) ausgewählt aus Acrylnitril, Methacrylnitril, Methylmethacrylat, Maleinsäureanhydrid, N- Phenylmaleinimid und den N-Alkylmaleinimiden. Ganz besonders bevorzugt ist Acrylnitril.

Das Copolymer D) kann kautschukfrei, beispielsweise SAN, oder kautschukhaltig, beispielsweise ABS oder ASA, sein. Beide Ausführungsformen sind gleichermaßen bevorzugt.

Man erhält das Copolymer D) in an sich bekannter Weise, z.B. durch Substanz-, Lösungs- Suspensions-, Fällungs- oder Emulsionspolymerisation. Einzelheiten dieser Verfahren sind z.B. im Kunststoffhandbuch, Hrg. Vieweg und Daumiller, Carl-Hanser-Verlag München, Bd. 1 (1973), S. 37 bis 42 und Bd. 5 (1969), S. 118 bis 130, sowie in Ullmanns Encyklopädie der technischen Chemie, 4. Aufl., Verlag Chemie Weinheim, Bd. 19, S. 107 bis 158 "Polymerisationstechnik", beschrieben.


Komponente E): Zusatzstoffe


Komponente E) sind weitere Zusatzstoffe bzw. Additive. Als Zusatzstoffe kommen in der Kunststoffherstellung und -verarbeitung übliche, dem Fachmann bekannte und in der Literatur beschriebene Stoffe in Betracht, beispielsweise Gleit- oder Entformungsmittel, Stabilisatoren gegen Wärmeeinwirkung (Antioxidantien), Stabilisatoren gegen Lichteinwirkung (UV-Stabilisatoren), Antistatika, Flammschutzmittel, sowie andere Additive, oder deren Mischungen.

Herstellung der thermoplastischen Formmassen

Die Herstellung der thermoplastischen Formmassen aus den Komponenten A), B), und ggf. C), D) und E) kann nach dem Fachmann bekannten und im Stand der Technik beschriebenen Mischverfahren erfolgen, beispielsweise unter Aufschmelzen in einem Extruder, Banburry-Mischer, Brabender-Mischer, Kneter, Walzenstuhl oder Kalander. Dabei kann man die Komponenten als solche zugeben, oder einige davon vormischen. Die Komponenten können jedoch auch "kalt" verwendet werden und das pulvrige oder aus Granulaten bestehende Gemisch wird erst bei der Verarbeitung aufgeschmolzen und homogenisiert.

Die Reihenfolge, in der die Komponenten gemischt werden, ist beliebig. Es können alle Komponenten gemeinsam gemischt werden; jedoch kann man auch zunächst zwei oder drei der Komponenten vormischen, und diese Mischung mit den restlichen Komponenten mischen.

Um eine homogene Mischung zu erzielen, ist eine intensive Durchmischung vorteilhaft. Dazu sind üblicherweise mittlere Mischzeiten (Verweilzeiten in der Mischvorrichtung) von 0,2 bis 30, bevorzugt 0,4 bis 20 Minuten, und Temperaturen von 200 bis 350, bevorzugt 225 bis 325°C, vorteilhaft.

Erfindungsgegenstand ist folglich auch ein Verfahren zur Herstellung der erfindungsgemäßen thermoplastischen Formmassen durch Vermischen der Komponenten in einer Mischvorrichtung, wobei die mittlere Mischzeit 0,2 bis 30 min und die Temperatur 200 bis 350°C beträgt.

Bevorzugt werden die Komponenten in einem Extruder oder einer anderen Mischvorrichtung bei den genannten Temperaturen unter Aufschmelzen des thermoplastischen Polymeren vermischt, und ausgetragen. Die Verwendung eines Extruders ist besonders bevorzugt, insbesondere eines gleichsinnig drehenden, dichtkämmenden Zweischneckenextruders. Das ausgetragene Polymer wird abgekühlt und zerkleinert, z.B. granuliert.

Die erfindungsgemäßen thermoplastischen Formmassen lassen sich zur Herstellung von Formteilen (auch Halbzeugen), Folien, Fasern und Schäume aller Art verwenden. Formteil im Sinne der Erfindung ist z.B. ein Spritzgussformteil oder ein tiefgezogenes Formteil, beispielsweise zum Einsatz als Haushaltsartikel, elektrisches Bauteil, medizinisch-technisches Gerät und Kraftfahrzeug-Bauteil, und schließt Halbzeuge (Tafeln, Rohre, Platten, Stäbe, etc.) ein. Die genannte Verwendung und die Formteile, Folien, Fasern und Schäume sind ebenfalls Gegenstand der Erfindung.

Die erfindungsgemäßen Formmassen zeichnen sich durch ein ausgewogenes Eigenschaftsprofil aus. Insbesondere ist die Kerbschlagzähigkeit, Schädigungsarbeit beziehungsweise Steifigkeit der aus den Formmassen hergestellten Formteile höher als bei den Formmassen des Standes der Technik.

Beispiele:

a) Einsatzstoffe

Komponente A): Pfropfcopolymer

Durch thermische Polymerisation in Ethylbenzol als Lösungsmittel wurden die folgenden Polymere A1) aus den jeweils genannten Monomermischungen (Gew.-% beziehen sich jeweils auf das Gesamtgewicht eingesetzter Monomerer) hergestellt:

| | | |
|---|---|---|
| A1-i: | 69 Gew.-% Styrol, 29 Gew.-% Acrylnitril, 2 Gew.% Maleinsäureanhydrid (die Viskositätszahl des Polymers betrug 66 ml/g); | |
| A1-ii: | 75 Gew.% Styrol, 24 Gew.-% Acrylnitril, 1 Gew.% Maleinsäureanhydrid (die Viskositätszahl des Polymers betrug 65 ml/g); | |
| A1-iii:73 | Gew.% Styrol, 23,5 Gew.% Acrylnitril, 3,5 Gew.% Maleinsäureanhydrid (die Viskositätszahl des Polymers betrug 80 ml/g). | |

Die Viskositätszahlen wurden ermittelt an einer 0,5 gew.-%igen Lösung in Dimethylformamid bei 25°C nach DIN 53727.

Als Polyamid A2) wurde eingesetzt:

A2-i: Ultramid® B 3 von BASF Aktiengesellschaft, ein Polyamid 6, erhalten aus ε-Caprolactam, mit einer Viskositätszahl von 150 ml/g (ermittelt an einer 0,5 gew.-%igen Lösung in 96 gew.-%iger Schwefelsäure bei 25°C nach DIN 53727);

A2-ii: Ultramid® A 3 von BASF Aktiengesellschaft, ein Polyamid 66, erhalten aus Hexamethylendiammoniumadipat, mit einer Viskositätszahl von 150 ml/g (ermittelt an einer 0,5 gew.-%igen Lösung in 96 gew.%iger Schwefelsäure bei 25°C nach DIN 53727).

Komponente B): Kautschuk

Als Komponente B-i wurde Fusabond® N NM493D, ein kommerziell erhältliches, mit Maleinsäureanhydrid funktionalisiertes Ethylen-Octen-Copolymer der Fa. DuPont, eingesetzt (die Melt-Flow-Rate MFR betrug 1,6 g/10 min, bestimmt nach ASTM D 1238, bei 190°C Schmelzetemperatur und 2,16 kg Nennlast).

Zum Vergleich wurde ein partikelförmiger Pfropfkautschuk B-V durch Emulsionspolymerisation in an sich bekannter Weise mit Kaliumpersulfat als Initiator und Stearat als Emulgator hergestellt. Er bestand aus 70 Gew.-% eines Pfropfkerns aus Polybutadien und 30 Gew.-% einer Pfropfschale aus einem SAN-Copolymer; das SAN-Copolymer enthielt 75 Gew.% Styrol und 25 Gew.-% Acrylnitril. Die gewichtsmittlere Teilchengröße $d_{50}$ betrug 370 nm.

Komponente C): Füll- oder Verstärkungsstoff

Als Komponente C-i wurde Talkum IT-Extra von Fa. Omya, Teilchendurchmesser $d_{10}$ = 1,7 $\mu$m, $d_{90}$ = 10,82 $\mu$m, bestimmt mittels Laserbeugung in einer Suspensionszelle an einer Talkum-Suspension in einer 1 gew.-%igen wässrigen Lösung des Tensids CV-K8 (Fa. CV-Tensidvertrieb, Hannover), Talkumgehalt der Suspension $1 \times 10^{-4}$ g/l, pH-Wert 8,5., eingesetzt.

Komponente D): Copolymer aus vinylaromatischen Monomeren und Comonomeren

Als Copolymer D-i wurde ein nach dem Verfahren der kontinuierlichen Lösungspolymerisation, wie es im Kunststoff-Handbuch, Hrg. R. Vieweg und G. Daumiller, Band V "Polystyrol", Carl-Hanser-Verlag München 1969, S 122-124, beschrieben ist, aus 75 Gew.-% Styrol und 25 Gew.-% Acrylnitril hergestelltes SAN mit einer Viskositätszahl von 66 ml/g (bestimmt an einer 0,5 gew.%igen Lösung in Dimethylformamid bei 25°C nach DIN 53726) eingesetzt.

b) Herstellung und Eigenschaften der Formmassen

Die in Tabelle 1 genannten Gewichtsteile der Komponenten A1), A2), B) und ggf. C) und D) wurden in einem Zweischneckenextruder ZSK30 von Fa.Wemer & Pfleiderer bei 240 bis 290°C°C homogenisiert und in ein Wasserbad extrudiert. Die erhaltenen Formmassen wurden granuliert und getrocknet. Aus diesen Granulaten stellte man auf einer Spritzgussmaschine bei 260°C Schmelzetemperatur und 60°C Werkzeugoberflächentemperatur Prüfkörper her und untersuchte diese.

Es wurden folgende Eigenschaften bestimmt:

- Wärmeformbeständigkeit als Vicat-Erweichungstemperatur an Normkleinstäben bei einer Heizrate von 50 K/Stunde und einer Kraft von 49,05 N nach DIN 53460, Verfahren B.

- Fließfähigkeit als Schmelzvolumenindex MVI bei 240°C Schmelzetemperatur und 5 kg Belastung nach EN ISO 1133.

- Kerbschlagzähigkeit $a_k$ an ISO-Stäben bei 23°C nach ISO 179/1eA.

- Kerbschlagzähigkeit $a_k$ an ISO-Stäben bei -30°C nach ISO 179 / 1eA.

- Schädigungsarbeit $W_s$ nach ISO 6603 an Platten der Dicke 3mm bei -30°C.

- Steifigkeit als Elastizitätsmodul (E-Modul) im Zugversuch bei einer Zuggeschwindigkeit von 1 mm/min bei 23°C nach ISO 527.

- Reißdehnung (Bruchdehnung) im Zugversuch bei einer Zuggeschwindigkeit von 50 mm/min bei 23°C nach ISO 527.

Die Gewichtsteile der Komponenten, aus denen die Formmassen hergestellt wurden, sowie die Eigenschaften der aus diesen Formmassen hergestellten Formteile sind Tabelle 1 zu entnehmen.

Tabelle 1: Thermoplastische Formmassen: Zusammensetzung und Eigenschaften

| Beispiel | 1 | 2 | 3 | 4 | 5 | 6 | 7 | V8 | 9 | V10 |
|---|---|---|---|---|---|---|---|---|---|---|
| Zusammensetzung [Gew.-Teile] | | | | | | | | | | |
| A1-i | 12 | 20 | 10,8 | - | - | - | - | 20 | 14,7 | 5 |

(fortgesetzt)

| Beispiel | 1 | 2 | 3 | 4 | 5 | 6 | 7 | V8 | 9 | V10 |
|---|---|---|---|---|---|---|---|---|---|---|
| Zusammensetzung [Gew.-Teile] | | | | | | | | | | |
| A1-ii | - | - | - | 22 | 20,7 | 15,7 | - | - | - | - |
| A1-iii | - | - | - | - | - | - | 6,7 | - | - | - |
| A2-i | 68 | 60 | 61,2 | 63 | 59,3 | 59,3 | 78,3 | 60 | - | 41 |
| A2-ii | - | - | - | - | - | - | - | - | 65,3 | - |
| B-i | 20 | 20 | 18 | 15 | 20 | 20 | 15 | - | 20 | - |
| B-V | - | - | - | - | - | - | - | 20 | - | 35 |
| C-i | - | - | 10 | - | - | - | - | - | - | - |
| D-i | - | - | - | - | - | 5 | - | - | - | 19 |
| Eigenschaften | | | | | | | | | | |
| Vicat B [°C] | 119 | 113 | 120 | 118 | 114 | 112 | 134 | 114 | 124 | 105 |
| MVI [ml/10min] | 2,0 | 1,5 | 1,9 | 4,4 | 4,2 | 3,8 | 3,4 | 6,7 | 12,6 * | 7,3 |
| Kerbschlagz. $a_k$ [kJ/m$^2$] bei 23°C | 46 | 55 | 81 | 63 | 83 | 85 | 48 | 51 | 54 | 51 |
| Kerbschlagz. $a_k$ [kJ/m$^2$] bei -30°C | 23 | 15 | 15 | 14 | 18 | 21 | 13 | 14 | 16 | 15 |
| Schädigungsarbeit $W_s$ [Nm] bei -30°C | 90 | 84 | 93 | 111 | 99 | 101 | 108 | 78 | 97 | 54 |
| E-Modul [MPa] | 2030 | 2190 | 2317 | 2315 | 2025 | 2010 | 1970 | 2020 | 2150 | 1870 |
| Reißdehn. [%] | 160 | 161 | 145 | 168 | 148 | 141 | 178 | 145 | 157 | 87 |
| mit "V" gekennzeichnete Beispiele sind Vergleichsbeispiele, <br> * gemessen bei 275°C | | | | | | | | | | |

Die Beispiele belegen die verbesserten mechanischen Eigenschaften, insbesondere die verbesserte Kerbschlagzähigkeit, Schädigungsarbeit beziehungsweise Steifigkeit, der erfindungsgemäßen schlagzäh-modifizierten thermoplastischen Formmassen gegenüber bekannten Formmassen.

**Patentansprüche**

1. Thermoplastische Formmassen, enthaltend

A) 40 bis 90 Gew.-% mindestens eines Pfropfcopolymers A), das erhältlich ist durch Umsetzung von

A1) 5 bis 95 Gew.-% eines Polymers A1), ausgewählt aus Styrol-Maleinsäureanhydrid-Copolymeren, Styrol-$\alpha$-Methylstyrol-Maleinsäureanhydrid-Terpolymeren, Styrol-Acrylnitril-Maleinsäureanhydrid-Terpolymeren und Styrol-N-Phenylmaleinimid-Maleinsäureanhydrid-Terpolymeren, und
A2) 5 bis 95 Gew.-% eines aliphatischen Polyamids A2),

B) 10 bis 30 Gew.-% mindestens eines ungepfropften oder gepfropften, nichtpartikelförmigen Kautschuks ohne Kern-Schale-Struktur B), der funktionelle Gruppen aufweist, welche mit den Endgruppen der Komponente A) reagieren können,
C) 0 bis 40 Gew.-% mindestens eines teilchen- oder faserförmigen Füll- oder Verstärkungsstoffs C),
D) 0 bis 50 Gew.-% mindestens eines Copolymers D) aus vinylaromatischen Monomeren d1) und Comonomeren d2) und
E) 0 bis 30 Gew.-% mindestens eines weiteren Zusatzstoffes E),

wobei die Summe der Komponenten A) bis E) 100 Gew.-% ergibt.

2.  Formmassen nach Anspruch 1, **dadurch gekennzeichnet, dass** das aliphatische Polyamid A2) ausgewählt ist aus Polyamid 6, Polyamid 66 und Copolyamid 6/66.

3.  Formmassen nach den Ansprüchen 1 bis 2, **dadurch gekennzeichnet, dass** solche Mengen an A1) und A2) eingesetzt werden, dass das molare Verhältnis von Anhydrid-Gruppen im Polymer A1 zu den Amino-Endgruppen im Polymer A2 von 3:1 bis 0,7:1 beträgt.

4.  Formmassen nach den Ansprüchen 1 bis 3, **dadurch gekennzeichnet, dass** solche Mengen an A1) und A2) eingesetzt werden, dass das molare Verhältnis von Anhydrid-Gruppen im Polymer A1 zu den Amino-Endgruppen im Polymer A2 von 2:1 bis 0,85:1 beträgt.

5.  Formmassen nach den Ansprüchen 1 bis 4, **dadurch gekennzeichnet, dass** der Kautschuk B) ausgewählt ist aus Ethylencopolymeren, Ethylen-Propylen-Copolymeren, Ethylen-Propylen-Dien-Copolymeren, Styrol-Butadien-Blockcopolymeren und Etylen-Octen-Copolymeren, und funktionelle Gruppen aufweist, welche mit den Endgruppen der Komponente A) reagieren können.

6.  Verfahren zur Herstellung der thermoplastischen Formmassen gemäß den Ansprüchen 1 bis 5, **dadurch gekennzeichnet, dass** in einem ersten Schritt durch Schmelzevermischung oder Reaktion in Lösung das Polymer A1) mit dem Polyamid A2) zum Pfropfcopolymer A) umgesetzt wird, und in einem zweiten Schritt diese Komponente A) mit den Komponenten B) und gegebenenfalls C) bis E) in einer Mischvorrichtung gemischt wird.

7.  Verfahren zur Herstellung der thermoplastischen Formmassen gemäß den Ansprüchen 1 bis 5, **dadurch gekennzeichnet, dass** in einem Schritt das Polymer A1) und das Polyamid A2) mit den Komponenten B) und gegebenenfalls C) bis E) durch Schmelzevermischung in einer Mischvorrichtung umgesetzt werden.

8.  Verwendung der thermoplastischen Formmassen gemäß den Ansprüchen 1 bis 5 zur Herstellung von Formkörpern, Folien, Fasern und Schäumen.

9.  Formkörper, Folien, Fasern und Schäume erhältlich aus den thermoplastischen Formmassen gemäß den Ansprüchen 1 bis 5.

**Claims**

1.  A thermoplastic molding composition, comprising

    A) from 40 to 90% by weight of at least one graft copolymer A), which is obtainable via reaction of

    A1) from 5 to 95% by weight of a polymer A1) selected from styrene-maleic anhydride copolymers, styrene-$\alpha$-methylstyrene-maleic anhydride terpolymers, styreneacrylonitrile-maleic anhydride terpolymers and styrene-N-phenylmaleimide-maleic anhydride terpolymers,
    and
    A2) from 5 to 95% by weight of an aliphatic polyamide A2),

    B) from 10 to 30% by weight of at least one ungrafted or grafted, non-particulate rubber without core-shell structure B), which has functional groups which can react with the end groups of component A),
    C) from 0 to 40% by weight of at least one particulate or fibrous filler or particulate or fibrous reinforcing material C),
    D) from 0 to 50% by weight of at least one copolymer D) composed of vinyl aromatic monomers d1) and of comonomers d2), and
    E) from 0 to 30% by weight of at least one other additive E),

    where the entirety of components A) to E) gives 100% by weight.

2.  The molding composition according to claim 1, wherein the aliphatic polyamide A2) has been selected from nylon-6, nylon-6,6, and the copolyamide nylon 6/6,6.

**3.** The molding composition according to claims 1 and 2, wherein the amounts used of A1) and of A2) are such that the molar ratio of anhydride groups in the polymer A1 to the amino end groups in the polymer A2 is from 3:1 to 0.7:1.

**4.** The molding composition according to claims 1 to 3, wherein the amounts used of A1) and of A2) are such that the molar ratio of anhydride groups in the polymer A1 to the amino end groups in the polymer A2 is from 2:1 to 0.85:1.

**5.** The molding composition according to claims 1 to 4, wherein the rubber B) has been selected from ethylene copolymers, ethylene-propylene copolymers, ethylene-propylene-diene copolymers, styrene-butadiene block copolymers, and ethylene-octene copolymers, and has functional groups which can react with the end groups of component A).

**6.** A process for preparation of the thermoplastic molding compositions according to claims 1 to 5, which comprises, in a first step, reacting the polymer A1) with the polyamide A2) via mixing of melts or reaction in solution to give the graft copolymer A), and, in a second step, mixing this component A) with components B) and optionally C) to E) in a mixing apparatus.

**7.** A process for preparation of the thermoplastic molding compositions according to claims 1 to 5, which comprises, in one step, reacting the polymer A1) and the polyamide A2) with components B) and optionally C) to E) via mixing of melts in a mixing apparatus.

**8.** The use of the thermoplastic molding compositions according to claims 1 to 5 for production of moldings, of foils, of fibers, or of foams.

**9.** A molding, a foil, a fiber, or a foam obtainable from the thermoplastic molding compositions according to claims 1 to 5.

**Revendications**

**1.** Masses de moulage thermoplastiques, contenant

A) 40 à 90% en poids d'au moins un copolymère greffé A), qui peut être obtenu par transformation de

A1) 5 à 95% en poids d'un polymère A1), choisi parmi les copolymères de styrène-anhydride de l'acide maléique, les terpolymères de styrène-$\alpha$-méthylstyrène-anhydride de l'acide maléique, les terpolymères de styrène-acrylonitrile-anhydride de l'acide maléique, et les terpolymères de styrène-N-phénylmaléinimide-anhydride de l'acide maléique, et
A2) 5 à 95% en poids d'un polyamide aliphatique A2),

B) 10 à 30% en poids d'au moins un caoutchouc non greffé ou greffé, non particulaire, sans structure noyau-coquille B), qui présente des groupes fonctionnels qui peuvent réagir avec les groupes terminaux du composant A),
C) 0 à 40% en poids d'au moins une charge ou substance de renforcement particulaire ou fibreuse C),
D) 0 à 50% en poids d'au moins un copolymère D) de monomères aromatiques de vinyle d1) et de comonomères d2) et
E) 0 à 30% en poids d'au moins un autre additif E), la somme des composants A) à E) valant 100% en poids.

**2.** Masses de moulage selon la revendication 1, **caractérisées en ce que** le polyamide aliphatique A2) est choisi parmi le polyamide 6, le polyamide 66 et le copolyamide 6/66.

**3.** Masses de moulage selon les revendications 1 à 2, **caractérisées en ce qu'**on utilise des quantités de A1) et de A2) telles que le rapport molaire des groupes anhydride dans le polymère A1 aux groupes terminaux amino dans le polymère A2 vaut 3:1 à 0,7:1.

**4.** Masses de moulage selon les revendications 1 à 3, **caractérisées en ce qu'**on utilise des quantités de A1) et de A2) telles que le rapport molaire des groupes anhydride dans le polymère A1 aux groupes terminaux amino dans le polymère A2 vaut 2:1 à 0,85:1.

**5.** Masses de moulage selon les revendications 1 à 4, **caractérisées en ce que** le caoutchouc B) est choisi parmi les copolymères d'éthylène, les copolymères d'éthylène-propylène, les copolymères d'éthylène-propylène-diène, les copolymères à blocs de styrène-butadiène et les copolymères d'éthylène-octène, et présente des groupes fonctionnels qui peuvent réagir avec les groupes terminaux du composant A).

6.  Procédé pour la préparation des masses de moulage thermoplastiques selon les revendications 1 à 5, **caractérisé en ce qu'**on transforme, dans une première étape, par mélange des masses fondues ou réaction en solution, le polymère A1) avec le polyamide A2) en copolymère greffé A) et, dans une deuxième étape, ce composant A) avec le composant B) et le cas échéant les composants C) à E) dans un dispositif de mélange.

7.  Procédé pour la préparation des masses de moulage thermoplastiques selon les revendications 1 à 5, **caractérisé en ce qu'**on transforme, dans une étape, le polymère A1) et le polyamide A2) avec le composant B) et le cas échéant les composants C) à E) par mélange des masses fondues dans un dispositif de mélange.

8.  Utilisation des masses de moulage thermoplastiques selon les revendications 1 à 5 pour la fabrication de corps moulés, de feuilles, de fibres et de mousses.

9.  Corps moulés, feuilles, fibres et mousses pouvant être obtenus à partir des masses de moulage thermoplastiques selon les revendications 1 à 5.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 202214 A
- WO 9827157 A
- US 5288799 A
- EP 722986 A
- WO 0483303 A
- US PS2071250 A
- US 2071251 A
- US 2130523 A
- US 2130948 A
- US 2241322 A
- US 2312966 A
- US 2512606 A
- US 3393210 A
- DE 10313681 A
- EP 1198491 A
- EP 922065 A
- EP 38094 A
- EP 38582 A
- EP 39524 A
- DE 1495198 A
- DE 2558480 A
- EP 129196 A
- WO 9528443 A
- EP 163411 A
- EP 244857 A

### In der Beschreibung aufgeführte Nicht-Patentliteratur

- Ullmanns Encyklopädie der Technischen Chemie. Verlag Chemie, 1980, vol. 19, 39-54
- Ullmanns Encyclopedia of Industrial Chemistry. VCH Verlag, 1992, vol. A21, 179-206
- **STOECKHERT.** Kunststofflexikon. Carl Hanser Verlag, 1992, 425-428
- **SAECHTLING.** Kunststoff-Taschenbuch. Carl Hanser-Verlag, 1998, 465-478
- Polymerization Processes. Interscience, 1977, 424-467
- **SAECHTLING.** Kunststoff-Taschenbuch. Hanser Verlag, 1998, 202-211
- Kunststoffhandbuch. Carl-Hanser-Verlag, 1973, vol. 1, 37-42
- KUNSTSTOFFHANDBUCH. 1969, vol. 5, 118-130
- Polymerisationstechnik. Ullmanns Encyklopädie der technischen Chemie. Verlag Chemie, vol. 19, 107-158
- Polystyrol. Kunststoff-Handbuch. Carl-Hanser-Verlag, 1969, vol. V, 122-124